# EUROPEAN PATENT APPLICATION

(11) **EP 2 695 522 A1**
(43) Date of publication of application: **12.02.2014**
(21) Application number: 13186723.6
(22) Date of filing: 30.09.2013
(51) Int. Cl.: A23C 11/10, A23C 3/02

(54) **Fermented soy milk products**

(30) Priority: 28.09.2012 EP 12186726
(71) Applicant: Alpro Comm. VA., 8560 Wevelgem (BE)
(72) Inventor: Fredrick, Eveline, 8560 Wevelgem (BE); De Buyser, Dirk, 8560 Wevelgem (BE)
(74) Representative: Vanhalst, Koen

(57) **Abstract**

The present invention relates to stirred soy yoghurts and methods for their production. In particular, the invention provides for stirred soy yoghurts without grainy structure and methods for producing them.

## Description

### TECHNICAL FIELD

The present invention is situated in the field of food technology. In particular, the invention relates to fermented soy milk products, more particularly stirred soy yoghurts, and methods for their production. More particularly, the invention provides for stirred soy yoghurts without grainy structure and methods for producing them.

### BACKGROUND

Fermentation of soy milk yields fermented soy milk products such as e.g. stirred soy yoghurt or yofu. Fermented soy milk products are suitable as dairy analogues for e.g. vegetarians. Furthermore, unlike dairy products, health problems associated with lactose, cholesterol, high levels of saturated fats, and traces of growth hormones, are avoided.

A well-known problem of fermented soy milk products, in particular stirred soy yoghurt, is the formation of protein-protein aggregates during shelf-life, which give a grainy structure to the stirred soy yoghurt, resulting in an unpleasant mouth feel and/or appearance. This graininess may get worse with shelf-life.

One attempt that has been made to minimize the grainy structure of fermented soy milk products is adding hydrocolloids, such as pectins, as stabilizers. However, the addition of hydrocolloids should preferably be kept to a minimum, in order to keep these products as naturally as possible, and to limit the product cost.

EP 0988793 discloses a process for producing a fermented soy milk product having a smooth structure, which process comprises adding a coagulating agent to starting soy milk, followed by heating and homogenizing the resulting mixture of soy milk and coagulant, and then subjecting said mixture to fermentation. The heating is carried out at 70°C to 150°C for 1 s to 10 min, preferably by a direct high-temperature short-time or ultra-high temperature method at 120°C to 150°C for 2 s to 10 s. Important to note is that in this document, coagulants are added in order to obtain a smooth structure, which is generally undesirable.

Consequently, there remains a need in the art for fermented soy milk products with a smooth, i.e. non-grainy, structure.

### SUMMARY OF THE INVENTION

The inventors have found that following a heat treatment at temperatures of about 80°C or higher, or following sterilization of soy milk, usually done prior to fermentation, complexes (AB) of acidic (A) and basic (B) subunits of glycinin present in the soy milk dissociate into reactive A units and B units, which aggregate with other proteins through the formation of disulfide bridges. These aggregates aggregate further into grains during the shelf-life of the fermented soy milk product resulting in a soy yoghurt with a grainy structure.

As shown in the experimental section, the inventors have unexpectedly found that by subjecting the soy milk to a mild heat treatment, i.e. at a lower temperature than usual, preferably at a temperature of between 72°C and 78°C, the formation of aggregates and grains in the fermented soy milk product can be avoided, which results in soy yoghurts with a smooth structure.

The aforementioned mild heat treatment is particularly advantageous for fermented soy milk products, in particular stirred soy yoghurts that have a viscosity at a temperature of 7°C of between about 500 mPa.s and about 1000 mPa.s at a shear rate of 100 s⁻¹, preferably between about 600 mPa.s and about 900 mPa.s, at 100 s⁻¹. Fermented soy milk products that have a lower viscosity are usually beverages or drinks (e.g. soy yoghurt drinks), wherein typically no grains are present due to homogenisation and/or due to a lower dry matter content. On the contrary, fermented soy milk products that have a higher viscosity (e.g. curd-like products, or cheese), or fermented soy milk products that are not stirred before filling (e.g. set-type yoghurts, fermented after filling of soy milk and ferments and other ingredients in the final packaging, e.g. container, vessel, pot,...), have a firm texture, which in fact forms one big aggregate and wherein individual grains cannot be distinguished.

Accordingly, in an aspect the invention provides a method for producing a fermented soy milk product, such as a stirred soy yoghurt comprising:
a) subjecting soy milk to a mild heat treatment at a temperature of between about 72°C and about 75°C for between about 20 seconds and about 30 minutes;
b) fermenting the heat-treated soy milk;
c) optionally adding a hydrocolloid or other nutritional, flavouring or colouring agents to the fermented soy milk product.
d) filling of the fermented soy milk into its packaging.

The goal is to produce such a stirred soy yoghurt having a smooth texture, i.e. having no or little graininess. In this production process, the fermentation takes place before the filling into the final packaging. Before and during this filling process, the fermented product is gently stirred or sheared, resulting in a stirred yoghurt. This is in contrast to set-type yoghurts (or stand yoghurts), which are fermented in the final packaging such as container, vessel, pot,... (i.e. after filling).

In preferred embodiments, the stirred soy yoghurt has a viscosity at a temperature of 7°C of between about 500 mPa.s and about 1000 mPa.s, more preferably between about 600 mPa.s and about 900 mPa.s, at a shear rate of 100 s⁻¹.

In embodiments, the stirred soy yoghurt is lactose-free.

In further embodiments, the stirred soy yoghurt is a vegetable product that does not comprise any animal- or dairy-derived products or components.

It should be noted that the time of the heat treatment in step a) is inversely related to the heating temperature. Preferably, the heat treatment is performed for a time between about 15 to 20 seconds and about 25 to 30 minutes. In essence, the mild heat treatment should be sufficient to sufficiently reduce the natural microorganism load present in soy beans, but should not be so high as to break the AB complex of glycinins.

In preferred embodiments, the heat treatment is carried out at about 72°C for between about 10 to 20 seconds and about 30 to 45 minutes, at about 75°C for between about 10 to 20 seconds and about 30 to 45 minutes, most preferably at about 75°C for about 22 seconds.

In other preferred embodiments, the heat treatment is carried out at a temperature of between 72°C and 73°C, between 72 and 74°C, between 72 and 75°C, between 72 and 76°C, between 72 and 77°C, or between 72 and 78°C.

Typically preferred embodiments encompass a mild heat treatment at a temperature from about 72°C to 75°C for between about 20 seconds and about 30 minutes. Preferably, said heating step is comprised between the boundaries of 72°C for 10 to 20 seconds and 75°C for 30 to 45 minutes. Most preferably, between about 72°C and about 75°C for between about 20 seconds and about 30 minutes. This temperature and time range allows the adequate reduction or elimination of bacterial load in the product, the adequate reduction of unwanted active proteins in the product, and also allows a smooth texture (i.e. absence or reduction of grains) of the stirred yoghurt, as shown in the examples section.

In further preferred embodiments, the soy milk is formulated prior to fermentation, more preferably a carbon source and/or an edible organic acid or its salt can be added to the soy milk.

In preferred embodiment, no coagulating agent is added to the soy milk prior to the heating and fermentation step. Coagulating agents may however be added after fermentation in a limited amount to further improve the product, e.g. in order to obtain a little thicker structure.

Coagulating agents are selected from the group consisting of: bittern, natural bittern (made from sea water in a salt pan), salts and hydroxides of alkaline earth metals, for example, magnesium hydroxide, magnesium salts (e.g., magnesium chloride or magnesium sulfate, calcium hydroxide, calcium salts (e.g., calcium sulfate, calcium chloride, calcium lactate or whey calcium) and gluconic [delta]-lactone, alone or in combination.

Step b) comprises inoculating the heat-treated soy milk with a bacterial culture and allowing the mixture of the heat-treated soy milk and the bacterial culture to ferment. In preferred embodiments, the bacterial culture comprises a *Streptococcus thermophilus* strain.

Optionally, a hydrocolloid may be added to the fermented soy milk product as stabilizer. In preferred embodiments, the hydrocolloid that is added to the fermented soy milk product is pectin, alginates, carrageenans, locust bean gum, scleroglucan or xanthan gum.

In embodiments, no hydrocolloid, such as pectin, is added to the fermented soy milk product.

In further preferred embodiments, the soy yoghurt (i.e. after fermentation, but prior to filling) is further processed, more preferably an agent selected from the group comprising: calcium slurry, fruits, flavouring agent, colouring agent, and functional additive is added to the soy yoghurt. In some embodiments, the hydrocolloids can be present in the calcium slurry or in the fruit preparation. The source of calcium in this calcium slurry is a mainly insoluble or unreactive source of calcium, such as tricalciumphosphate or tricalciumcitrate. The objective of adding such a calcium slurry is nutritionally fortifying the final soy yoghurt with calcium. With such type of insoluble calcium salts it is not possible nor the objective of getting coagulation or tofu-reaction, which is in contrast to the calcium salts used as coagulating agents.

Another aspect of the invention relates to a stirred soy yoghurt, wherein complexes of an acidic subunit of glycinin and a basic subunit of glycinin linked together through a disulfide bond are still present. Preferably, the presence of said complexes is determined by SDS-PAGE under non-reducing conditions.

In a preferred embodiment, the invention relates to a stirred soy yoghurt having a ratio of the 7S fraction of soy proteins to the 11S fraction of soy proteins as determined by sodium dodecyl sulphate polyacrylamide gel elecrophoresis (SDS-PAGE) under non-reducing conditions of between 0.5 and 1.5, preferably between 0.5 and 1.26, more preferably between 0.8 and 1.26. The 7S fraction is considered as the sum of staining developed by proteins separating at 85-95 kD (alpha' - beta-conglycinin), 70-80 kDa (alpha - beta-conglycinin) and 45-53 kDa (beta - beta-conglycinin) and the 11S fraction is considered as the sum of staining developed by proteins separating at 57-65 kDa (complex AB - glycinin), 36-45 kDa (A - glycinin) and 17-25 kDa (B - glycinin), as determined by sodium dodecyl sulphate polyacrylamide gel elecrophoresis (SDS-PAGE) under non-reducing conditions.

Preferably, the ratio of the 7S fraction of soy proteins to the 11S fraction of soy proteins in the stirred soy yoghurt is determined during shelf life, such as within 47 days from production, more preferably within 21 days from production. Accordingly, in preferred embodiments, the invention provides a stirred soy yoghurt having a ratio of the 7S fraction of soy proteins to the 11S fraction of soy proteins as determined by sodium dodecyl sulphate polyacrylamide gel elecrophoresis (SDS-PAGE) under non-reducing conditions within 47 days from production, more preferably within 21 days of production, of between 0.5 and 1.5, more preferably between 0.5 and 1.26, even more preferably between 0.8 and 1.26.

In preferred embodiments, the stirred soy yoghurt has a smooth structure, i.e. has no grains or has acceptable graininess.

In embodiments, the stirred fermented soy milk product, in particular the stirred soy yoghurt, does not comprise a coagulating agent selected from the group consisting of: bittern, natural bittern (made from sea water in a salt pan), salts and hydroxides of alkaline earth metals, for example, magnesium hydroxide, magnesium salts (e.g., magnesium chloride or magnesium sulfate, calcium hydroxide, calcium salts (e.g., calcium sulfate, calcium chloride, calcium lactate or whey calcium) and gluconic [delta]-lactone.

In further embodiments, the stirred fermented soy milk product, in particular the stirred soy yoghurt, does not comprise a coagulating agent.

In particularly preferred embodiments, the stirred fermented soy milk product, in particular the stirred soy yoghurt, has a viscosity at a temperature of 7°C of between about 500 mPa.s and about 1000 mPa.s, more preferably between about 600 mPa.s and about 900 mPa.s, at 100 s⁻¹.

In embodiments, no hydrocolloid, such as pectin, is added to the stirred fermented soy milk product, in particular stirred soy yoghurt.

Preferably, the stirred soy yoghurt is a non-dairy product, and/or wherein the stirred soy yoghurt does not contain lactose, and/or other animal- or dairy-derived products or components.

Also in preferred embodiments, the stirred soy yoghurt is obtainable by the methods as taught herein.

In embodiments, the stirred soy yoghurt is obtainable by a method comprising:
a) subjecting soy milk to a mild heat treatment at a temperature of between about 72°C and about 78°C, between about 72°C and about 77°C, between about 72°C and about 76°C, or between about 72°C and about 75°C, more preferably between about 72°C and about 75°C for between about 20 seconds and about 30 minutes;
b) fermenting the heat-treated soy milk;
c) optionally adding a hydrocolloid, such as pectin, or other nutritional, flavouring or colouring agents to the fermented soy milk product (i.e. soy yoghurt);
d) filling the soy yoghurt in their packaging such as container, vessel, pot, etc., thereby obtaining a stirred soy yoghurt

In embodiments, the stirred soy yoghurt is obtainable by a method comprising:
a) subjecting soy milk to a mild heat treatment at a temperature of between about 72°C and about 78°C, between about 72°C and about 77°C, between about 72°C and about 76°C, or between about 72°C and about 75°C, more preferably between about 72°C and about 75°C for between about 20 seconds and about 30 minutes;
b) fermenting the heat-treated soy milk;
c) optionally adding nutritional, flavouring or colouring agents to the fermented soy milk product (i.e. soy yoghurt), but no hydrocolloid, such as pectin;
d) filling the soy yoghurt in their packaging such as container, vessel, pot, etc., thereby obtaining a stirred soy yoghurt

In embodiments, the stirred soy yoghurt is obtainable by a method comprising:
a) subjecting soy milk to a mild heat treatment at a temperature of between about 72°C and about 78°C, between about 72°C and about 77°C, between about 72°C and about 76°C, or between about 72°C and about 75°C, more preferably between about 72°C and about 75°C for between about 20 seconds and about 30 minutes;
b) fermenting the heat-treated soy milk;
c) optionally adding a hydrocolloid, such as pectin, or other nutritional, flavouring or colouring agents to the fermented soy milk product (i.e. soy yoghurt);
d) filling the soy yoghurt in their packaging such as ontainer, vessel, pot, etc., thereby obtaining a stirred soy yoghurt
wherein no coagulating agent is added to the soy milk prior to the heating and fermentation step.

In embodiments, the stirred soy yoghurt is obtainable by a method comprising:
a) subjecting soy milk to a mild heat treatment at a temperature of between about 72°C and about 78°C, between about 72°C and about 77°C, between about 72°C and about 76°C, or between about 72°C and about 75°C, more preferably between about 72°C and about 75°C for between about 20 seconds and about 30 minutes;
b) fermenting the heat-treated soy milk;
c) optionally adding nutritional, flavouring or colouring agents to the fermented soy milk product (i.e. soy yoghurt), but no hydrocolloid, such as pectin;
d) filling the soy yoghurt in their packaging such as container, vessel, pot, etc., thereby obtaining a stirred soy yoghurt
wherein no coagulating agent is added to the soy milk prior to the heating and fermentation step.

Preferably, the stirred fermented soy milk product of the invention is a dairy analogue, more preferably a vegetable product, which does not contain lactose and/or dairy proteins. Preferably, the product is a vegetable product that does not contain animal-derived products.

In further preferred embodiments, the fermented soy milk product is a stirred soy yoghurt, having a protein content of between 2 and 5.5 % by weight, more preferably between 3 and 5 % by weight, even more preferably between 3.5 and 4.5 % by weight.

In further preferred embodiments, the fermented soy milk product is a stirred soy yoghurt having a fat content of between 1 and 10 % by weight, more preferably between 1.25 and 6 % by weight, even more preferably between 1.5 and 4 % by weight, most preferably between 1.75 and 3% by weight.

In particularly preferred embodiments, the fermented soy milk product is stirred soy yoghurt, more preferably a spoonable, stirred soy yoghurt, having a smooth structure (i.e. low or no graininess).

Yet another aspect of the present invention relates to uses of the stirred soy yoghurt as taught herein.

In a preferred embodiment, the invention provides for the use of the stirred soy yoghurt as taught herein for the production of a food product. An example provides for the use of the fermented soy milk products as taught herein for cooking. Typically, said stirred soy yoghurt is a vegetarian product, i.e. a non-dairy product, not containing lactose, and/or other animal- or dairy-derived products or components.

### BRIEF DESCRIPTION OF THE DRAWINGS

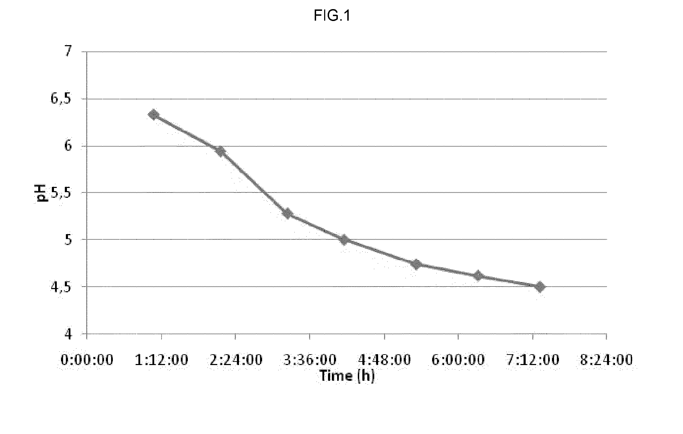

**FIG. 1** **pH profile during fermentation of mild heat-treated soy milk.** Soy milk was supplemented with sucrose, citric acid and sodium chloride (formulated soy milk) and subjected to a heat treatment at 75°C for 22 s. Following cooling, fermentation was carried out at 43°C using a conventional yoghurt culture comprising *Streptococcus thermophilus.* Every hour a sample was taken to construct the fermentation profile.

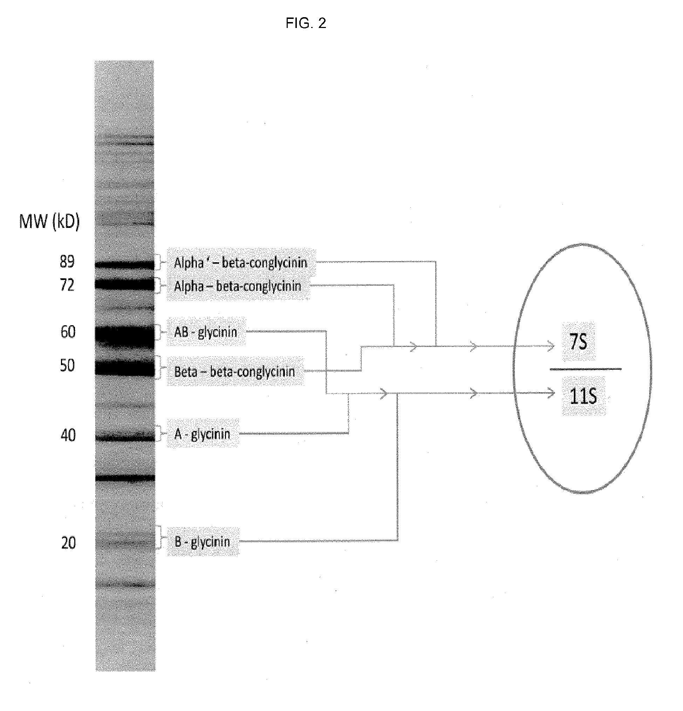

**FIG. 2** **Determination of the 7S/11S ratio by SDS-PAGE under non-reducing conditions.** A sample of (processed) stirred soy yoghurt was treated with sample buffer without reductans and loaded on a polyacrylamide gel to perform non-reducing SDS-PAGE. After electrophoresis the gel was coloured with coomassie Briljant Blue R250, destained and scanned to determine the 7S/11S ratio. 7S is considered as the sum of staining developed by proteins separating at 85-95 kD (alpha' - beta-conglycinin), 70-80 kDa (alpha - beta-conglycinin) and 45-53 kDa (beta - beta-conglycinin) and 11S is considered as the sum of staining developed by proteins separating at 57-65 kDa (complex AB - glycinin), 36-45 kDa (A - glycinin) and 17-25 kDa (B-glycinin).

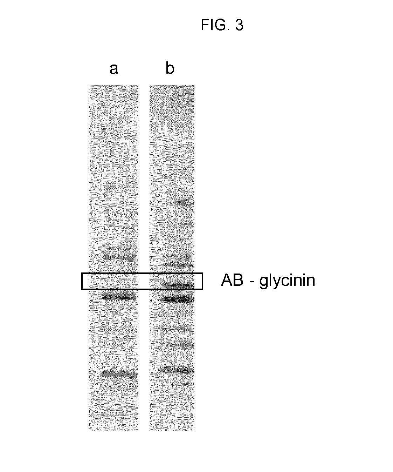

**FIG. 3** **Scans of representative gels of processed stirred soy yoghurts produced from UHT-treated or mild heat-treated soy milk.** Formulated soy milk was either subjected to UHT treatment (a) or a heat treatment at 75°C for 22 s (b) prior to fermentation. The fermented soy milk was mixed with a strawberry preparation to produce strawberry yofu (i.e. strawberry stirred soy yoghurt). A sample of the strawberry yofus was treated with sample buffer without reductans and loaded on a polyacrylamide gel to perform SDS-PAGE. After electrophoresis the gel was coloured with coomassie Briljant Blue R250, destained and scanned. The rectangle shows the position of the AB complex on the gel.

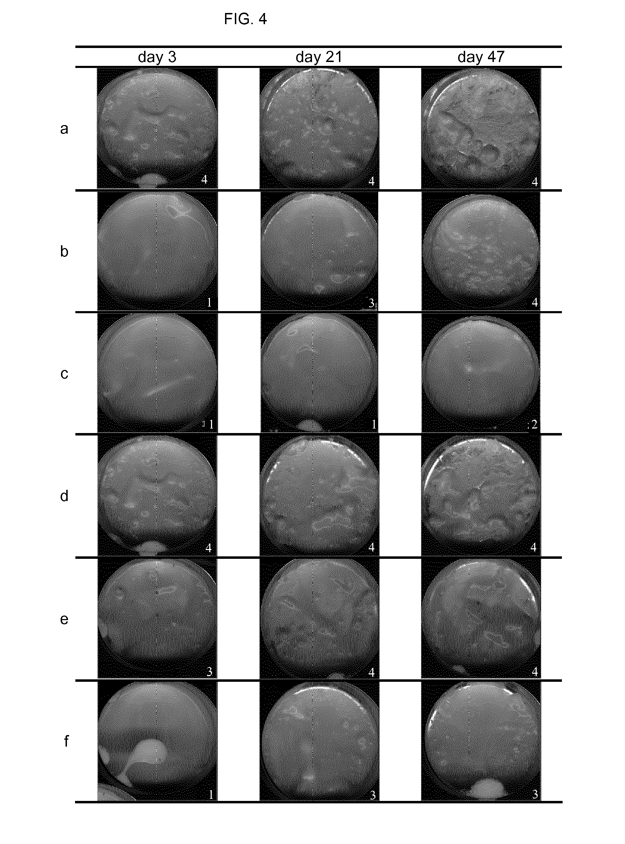

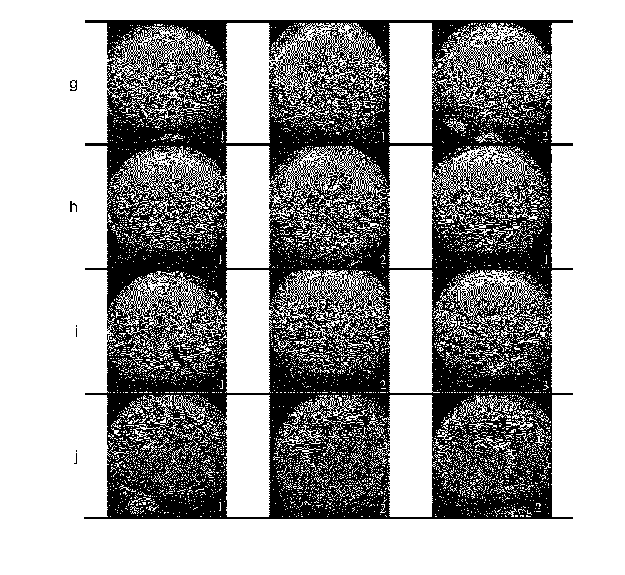

**FIG. 4** **Representative scans of samples of stirred soy yoghurts illustrating graininess during shelf life.** Formulated soy milk was subjected to UHT treatment (a-e) or a heat treatment at 75°C for 22 s (f-j) prior to fermentation. The fermented soy milk products were left as such (a, f) or mixed with Calcium preparation 1 with pectin (b, g), Calcium preparation 2 with pectin (c, h), Calcium preparation 3 without pectin (d, i) or a fruit preparation containing pectin (e, j). Samples of these (processed) fermented soy milk products (i.e. stirred soy yoghurts) were smeared on a plate and scored for graininess according to the photometric scanning method. 1: no grains; 2: acceptable graininess, 3: moderate graininess, and 4: very strong graininess.

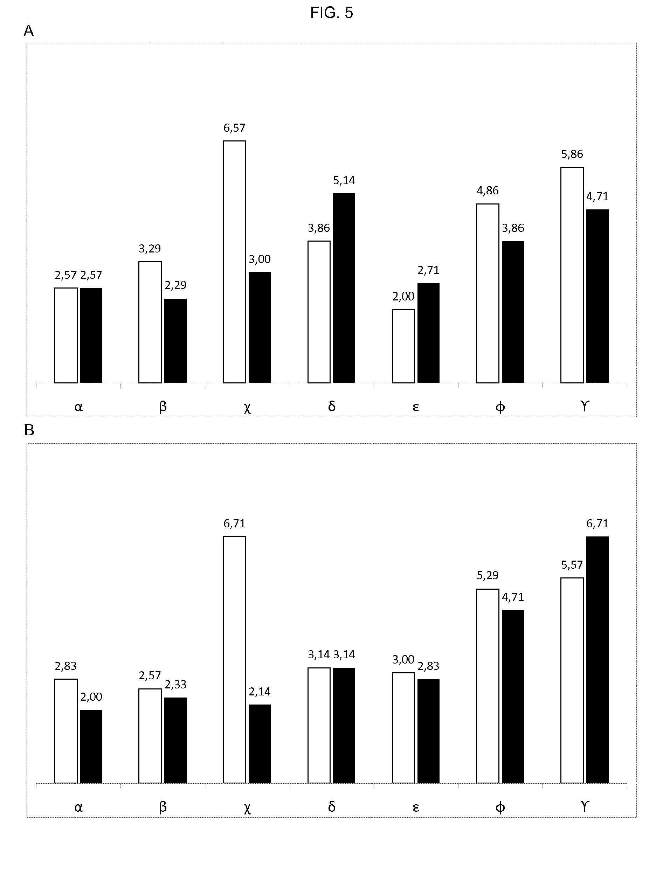

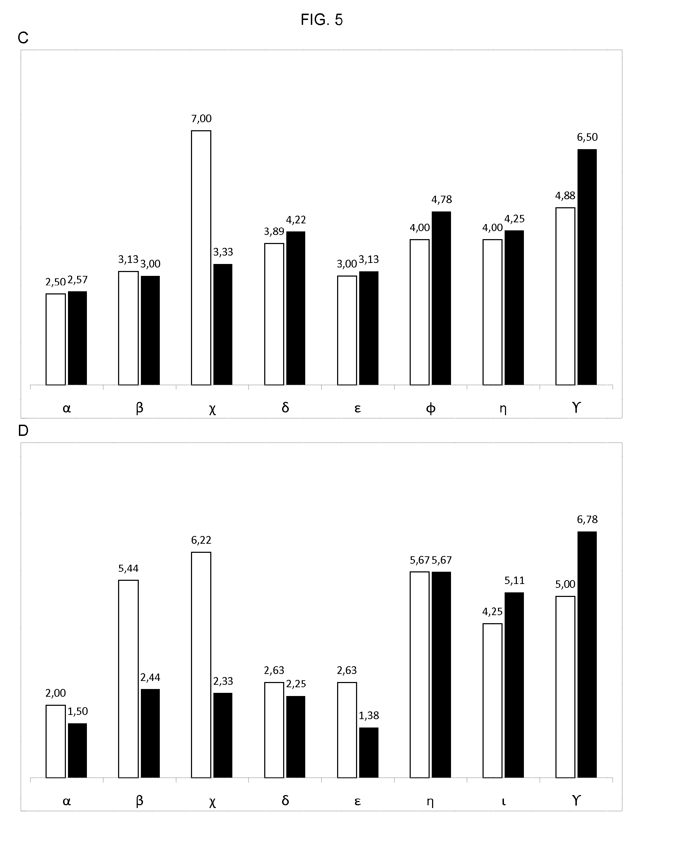

**FIG. 5** **Sensory evaluation of stirred soy yoghurts products during shelf life.** Formulated soy milk was subjected to UHT treatment (white) or a heat treatment at 75°C for 22 s (black) prior to fermentation. The fermented soy milk product was left as such (A) or mixed with calcium preparation 1 with pectin (B), calcium preparation 3 without pectin (C) or a strawberry preparation containing pectin (D). A trained panel scored the (processed) fermented soy milk products (i.e. stirred soy yoghurts) after 4 weeks of storage for "off-flavors" (α), "gray color" (β), "graininess" (χ), "soja flavor" (δ), "oxidation" (ε), "acidity" (φ), "sweetness" (η), "fruit intensity" ( 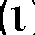 ) and/or "general appreciation" (y) from 0 (low intensity) to 9 (strong intensity).

### DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The term also encompasses "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

When a numerical value is used to indicate temperature, said value encompasses the exact numerical value as such, as well as all numerical values that would be rounded up to said exact numerical value according to standard mathematical and/or statistical regulations. For example, a temperature of "80°C" encompasses the values of 79.5; 79.6; 79.7; 79.8; 79.9; 80.0; 80.1; 80.2; 80.3; and 80.4°C. When this is used in combination with the term "about", said temperature encompasses also temperatures that differ from said exact temperature by 0.1, 0.2, 0.3, 0.4, 0.5, 0.6, 0.7, 0.7, 0.9, or 1.0 °C, both in the positive or negative range.

Similarly, when a period of time is indicated using a numerical value such as "about 30 minutes", said value encompasses the exact time indicated as well as periods that deviate therefrom by e.g. less than one minute, half a minute, or 1, 2, 3, 4 or 5 minutes. Analogously, the term "about 30 seconds" encompasses about 20, 25 seconds to about 35, 40 seconds, as well as any time in between.

As used throughout the present disclosure, the terms "concentration" and "content" are used interchangeably and refer to the weight concentration or mass fraction of a constituent, i.e. the mass of a constituent divided by the total mass of all constituents, and is expressed in % by weight or % w/w.

All documents cited in the present specification are hereby incorporated by reference in their entirety.

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

The invention relates to fermented soy milk products and methods for their production.

As used herein, the term "fermented soy milk product" refers to a soy bean-derived food product, food ingredient or functional food, obtained through fermentation of soy milk. Non-limiting examples of fermented soy milk products include soy yoghurt. Preferably, the fermented soy milk product is soy yoghurt or yofu, more preferably a stirred soy yoghurt.

Depending on the viscosity, yoghurts, in particular soy yoghurts, are generally classified as "drinkable yoghurts" that can be drunk, or "spoonable yoghurts" that can be eaten with a spoon. The soy yoghurts or yofus disclosed herein are preferably spoonable soy yoghurts, more preferably stirred soy yoghurts, i.e. yoghurts that have been fermented before final filling in their packaging, e.g. vessel, pot, or container.

As used herein, "drinkable soy yoghurts" or "drinking soy yoghurts" or "soy yoghurt drinks" refer to soy yoghurts that have a viscosity at a temperature of 7°C of below 500 mPa.s, preferably below 250 mPa.s, more preferably below 100 mPa.s or 50 mPa.s at 100 s⁻¹.

As used herein, "spoonable soy yoghurts" refer to soy yoghurts that have a viscosity at a temperature of 7°C of between about 500 mPa.s and about 1000 mPa.s, more preferably between about 600 mPa.s and about 900 mPa.s at 100 s⁻¹.

As used herein, "stirred soy yoghurts" are defined being fermented in a tank and the final fermented soy milk product or soy yoghurt is stirred prior to cooling and packing. The texture of a stirred soy yoghurt is less firm than the texture of a set soy yoghurt.

As used herein, "set soy yoghurts", "set-type soy yoghurts" or "stand soy yoghurts" are synonyms and are defined as being fermented and cooled in their final package and have a firm jelly-like texture.

### Method for producing a fermented soy milk product

In a first aspect, the invention provides for a method for producing a fermented soy milk product, preferably a stirred soy yoghurt, comprising the steps of:
a) subjecting soy milk to a heat treatment at a temperature of between about 72°C and about 78°C;
b) fermenting the heat-treated soy milk;
c) optionally adding a hydrocolloid to the fermented soy milk product or soy yoghurt.
d) filling the soy yoghurt in their packaging such as container, vessel, pot, etc., thereby obtaining a stirred soy yoghurt

As used herein, the term "soy milk" refers to a beverage made from soybeans. It is usually an aqueous dispersion comprising soybean protein and oil.

Soy milk prepared by any conventional method may be used in the methods of the invention. A method for preparing soy milk generally entails hydrating whole or defatted soybeans by e.g. soaking in water, heating, grinding to obtain slurry, and removing the okara (soy pulp fiber) from the soy milk by a method such as filtration. For example, a soy milk preparation known by the name of "tonyu" may be used for producing the fermented soy milk product of the invention. The tonyu is obtained from whole soybeans and is the subject of an AFNOR standard (NF V 29-001). Briefly, to obtain the tonyu, soybeans are shelled and then mixed with water and ground hot. The ground product is separated after settling out so as to separate the solid residue, called "okara", from the soy milk, which constitutes the tonyu.

### Formulation of the soy milk

Optionally, the method may further comprise a step of formulating the soy milk prior to fermentation.

For example, a carbon source may be added to the soy milk. As used herein, the term "carbon source" is used in reference to any compound which may be utilized by the bacterium as a source of carbon for bacterial growth and/or metabolism. Said carbon source may be utilized by the bacteria, thereby promoting (e.g. accelerating) the fermentation process. Non-limiting examples include carbohydrates, e.g. monosaccharides such as glucose or fructose, sucrose, disaccharides, oligosaccharides, acids, alcohols, aldehydes, ketones, amino acids and peptides. Preferably, a carbohydrate is added, more preferably sugar and/or fructose. The addition of a carbon source is especially desirable when the amount of carbohydrates naturally present in the soy milk is too small. The final carbohydrate concentration should preferably range between 0.1 and 5 % by weight of the soy milk.

Minor amounts of edible organic acids, e.g. citric acid, lactic acid, or their salts, e.g. sodium citrate, may be added to the soy milk to decrease the pH. The final pH should preferably range between 6 and 7, more preferably about pH 6.5.

### Step a) mild heat treatment of soy milk

In order to have the fermentation proceed smoothly, i.e. with minimal interference of micro-organisms that are naturally present in the soy milk, and also to prevent the putrefaction of the fermentation mixture, the soy milk has to be subjected to a heat treatment prior to fermentation in order to slow down the growth of and/or kill micro-organisms that are naturally present in the soy milk.

The lower limit of the temperature of the heat treatment is determined by food safety requirements. In order to avoid e.g. poisoning and foodborne illnesses, it is highly recommended to subject the soy milk to a heat treatment in analogy with dairy milk. For example, it is recommended to heat milk to a temperature of no less than 72°C and to retain it at that temperature for no less than 15 s or to use any other time and temperature combination of equal or greater lethal effect on bacteria for pasteurizing milk (Guidelines For Food Safety, Validation and Verification of Heat Treatment Equipment and Processes, Australia New Zealand Dairy Authorities' Committee, June 2007). The Food and Drug Administration defines pasteurization of milk as heating every particle of milk or milk product, in properly designed and operated equipment, to 63°C, 72°C, or 89°C, or to the specified temperatures of 63°C or 72°C, and to hold it continuously at or above that temperature for at least 30 min, 15 s, or 1 s, respectively (Pasteurized Milk Ordonance). Said temperature can be increased by 3°C if the fat content of the milk product is 10% or greater, or if the product comprises a total solid amount of 18% or greater, or if it contains added sweeteners. EC Directive 92/46/EEC of June 1992 indicates that pasteurized milk must have been obtained by means of a treatment involving a high temperature for a short time (at least 71,7 °C for 15 s or any equivalent combination) or a pasteurization process using different time and temperature combinations to obtain an equivalent effect.

After having conducted extensive research, the inventors have found that by subjecting the soy milk to a heat treatment at temperatures of about 80°C or higher, disulphide bonds in AB complexes of glycinin were broken, resulting in dissociated A (acidic) and B (basic) units, which in turn aggregated with other proteins through reformation of disulphide bonds, finally resulting in fermented soy milk products with a grainy structure. Hence, unlike dairy milk, which is usually heated to temperatures well above 80°C (in order to sufficiently denature the whey proteins), heat treatment of soy milk should be kept to a maximum temperature of 80°C, in order to prevent cleavage of the AB glycinin disulfide bonds.

Accordingly, the heat treatment of the soy milk is preferably carried out at a temperature of between about 72°C and about 78°C, such as at about 72°C, 73°C, 74°C, 75°C, 76°C, 77°C, or 78°C.

The duration (in time) of the heat treatment is inherently linked to the heating temperature or in other words, the heating temperature determines the time of the heat treatment. Time and heating temperature are inversely linked, i.e. the time of the heat treatment can be reduced by elevating the heating temperature.

Preferably, the heat treatment is performed for a time between about 10 s and about 45 min, more preferably between about 15s and about 30 min, most preferably between about 20 s and about 30 min.

Preferred combinations are a heat treatment at about 72°C for between about 10, or 15 to 20 seconds and about 45 minutes, such as at about 72°C for about 1 to 15 minutes. Other preferred combinations are a heat treatment at about 75°C for between about 10 to 20 seconds and about 30 minutes, more preferably at about 75°C for about 22 seconds. Preferably, said heat treatment is carried out in the following range: between for about 30 to 45 minutes at about 72°C and for about 10 to 20 seconds at about 75°C. Alternatively said heat treatment is carried out in the following range: between for about 10 to 20 seconds at about 72°C and for about 30 to 45 minutes at about 75°C. Preferably, said heat treatment is carried out in the following range: between for about 30 minutes at about 72°C and for about 20 seconds at about 75°C. Maximum heat treatments without substantial degradation of AB complexes lie at about 45 minutes at 72 °C, or about 30 minutes at 75°C. Above 80°C, the AB complex is rapidly degraded. Minimal heat treatment for reducing the microorganism load sufficiently lies around 72°C, for 15 seconds. Any range of temperature and time falling within said two end-points is therefore feasible.

### Step b) fermentation of heat-treated soy milk

The next step involves the fermentation of the heat-treated soy milk, which may comprise inoculating a bacterial culture into the soy milk and fermenting the same.

Any conventional process for the fermentation of soy milk may be applied in the methods of the invention, such as, for example the soy milk fermentation process as disclosed in EP-A2-0521331.

Soy milk is usually fermented with lactic acid bacteria. The lactic acid bacterium may be any lactic acid producing strain, preferably a lactic acid producing strain belonging to a genus selected from the group comprising *Lactobacillus* sp., *Streptococcus* sp., *Lactococcus* sp., *Leuconostoc* sp., *Bifidobacterium* sp. and *Pediococcus* sp, such as a lactic acid producing strain belonging to a species selected from the group comprising *Lactobacillus acidophilus, Lactobacillus bulgaricus, Streptococcus lactis, Streptococcus cremoris, Streptococcus durans, Streptococcus thermophilus, Lactococcus lactis, Leuconostoc citrovorum, Bifidobacterium bifidum, Bifidobacterium longum, Bifidobacterium breve, Bifidobacterium infantis* and *Bifidobacterium animalis.* These lactic acid bacteria may be used alone or in combination. Preferably, the bacterial culture comprises a *Streptococcus thermophilus* strain.

The bacterial culture may be inoculated as living bacteria or in a frozen or freeze-dried state. When inoculating the bacterial culture as living bacteria, a bulk starter culture may be prepared, which may then directly be added to the soy milk.

The amount of inoculum may range between 10³ and 10⁹ CFU/ml, depending on the type of inoculum applied and the temperature and time of fermentation.

The fermentation temperature and the fermentation time may be appropriately decided depending on the type of the lactic acid bacterium to be used. Each bacterial culture has its optimum growth conditions and these conditions are usually aimed at. Usually, the fermentation is carried out at temperatures between 15°C and 45°C for between 3 and 24 hours. As a general rule, fermentation is allowed to proceed until the acidity of the fermentation mixture has reached a pH below 4.6.

Fermentation may be carried out with any conventional device or fermentation tank or vessel used for conventional fermentation of e.g. cow milk.

### Step c) optional addition of hydrocolloids to the fermented soy milk product or yoghurt

In a further step, hydrocolloids, preferably pectins, may optionally be added to the fermented soy milk product or yoghurt as stabilizers.

Without wanting to be bound by any theory, the hydrocolloids may further shield reactive sulfhydryl groups (-RSH), thereby avoiding the formation of disulfide bridges and hence, protein-protein aggregation, thereby stabilizing the fermented soy milk product, and hence further reduce grain formation.

As used herein the term "hydrocolloids" refers to polysaccharides of high molecular weight that form colloid dispersions in water. They are usually extracted from plants or seaweeds or produced by microbial synthesis. Non-limiting examples of hydrocolloids include pectins, alginates, carrageenans, locust bean gum, scleroglucan or xanthan gum.

In a preferred embodiment, pectin is added to the fermented soy milk product or yoghurt.

The amount of hydrocolloids to be added to the fermented soy milk product of the invention in order to stabilize it may be substantially lower compared to the amount of hydrocolloids that has to be added to conventional fermented soy milk products or yoghurts, i.e. those wherein the soy milk was heated more drastically before fermentation.

The fermented soy milk product or soy yoghurt can be consumed as such, or it can be further processed.

For example, it is possible to mix the fermented soy milk product with fruit (in the form of pieces, pulp and/or juice), nutritional additives such as calcium preparations or calcium slurries, flavouring agents, colouring agents, nutritional or functional additives etc.

The source of calcium in the calcium preparations or calcium slurries is a mainly insoluble or unreactive source of calcium, such as tricalciumphosphate or tricalciumcitrate. The objective of adding such a calcium slurry is nutritionally fortifying the final soy yoghurt with calcium. With such type of insoluble calcium salts it is not possible nor the objective of getting coagulation or tofu-reaction, in contrast with coagulants such as soluble calcium-salts.

The term "flavouring agent" as used herein generally refers to any substance that may be safely used in food, the function of which is to impart flavour. Non-limiting examples of flavouring agents are sugar, including sucrose, glucose, fructose, maltose, inverted sugar, or any other sweet monosaccharide or disaccharide, or sweet polyhydric alcohol, sugar cane juice, stevia extract, and/or some other suitable sweetener.

As used herein, the term "functional additive" denotes a substance that may be safely used in food and that is intended to confer a health benefit to the consumer. Non-limiting examples of functional additives include tricalciumphosphate, vitamin A, vitamin B2, vitamin B12, vitamin D, vitamin E, zinc, fiber, protein, potassium, phosphorus, fatty acids (e.g. omega 3, omega 6), oligosaccharide, and/or any other suitable functional additive. Preferably, said functional additive may be selected based at least in part on a neutral-taste quality that may have little or no impact on the overall taste of the final product.

In some embodiments, the hydrocolloids, such as pectin, can be part of a fruit preparation or can be added to the calcium preparation.

### Step d) filling

In order to obtain a stirred soy yoghurt (yofu), the fermented soy milk or soy yoghurt is filled, or transferred to its final packaging such as container, vessel, pot, etc., during which the mixture is stirred due to shearing forces during transport. The filling step hence takes place after fermentation, in contrast to set yoghurts, which are filled before fermentation and are not stirred after fermentation.

Yet another aspect relates to uses of the stirred soy yoghurts of the invention. For example, disclosed herein is the use of the stirred soy yoghurt for producing a food product. As an example stirred soy yoghurt can be used as an ingredient for soy milk shake or for soy ice cream, cooking cream, or dressings which are based on stirred soy yoghurt.

### Stirred soy yoghurt

Another aspect of the invention relates to a stirred soy yoghurt, such as those obtainable by the method of the invention as disclosed herein. Such stirred soy yoghurt has a smooth, i.e. non-grainy, structure and can be further characterized as follows.

In an embodiment, a stirred soy yoghurt is provided having a ratio of the 7S fraction of soy proteins to the 11S fraction of soy proteins (7S/11S) as determined by sodium dodecyl sulphate polyacrylamide gel electrophoresis (SDS-PAGE) under non-reducing conditions of between 0.5 and 1.5, preferably between 0.5 and 1.26, more preferably between 0.8 and 1.26.

Preferably, said 7S/11S ratio is determined during shelf life, such as within 47 days from production, more preferably within 21 days from production.

The term "7S (protein) fraction" generally denotes a mixture of proteins which have a sedimentation coefficient of 7 Svedberg units. In soy, the major component of the 7S fraction of proteins is beta-conglycinin, which may account for about 85% of the 7S protein fraction.

The term "Svedberg unit" or "S" generally denotes a unit for sedimentation rate (i.e. how fast a particle settles or sediments), whereby one Svedberg unit is defined as 10⁻¹³ seconds (s). The Svedberg unit can be used to indicate a particle size based on the rate at which it travels to the bottom of a test tube subjected to a centrifugal force.

As used herein, the term "7S fraction of soy proteins" particularly refers to the 7S fraction of soy proteins as determined by SDS-PAGE under non-reducing conditions and in particular denotes the sum of the staining developed by proteins separating at 85-95 kD (comprising alpha' - beta-conglycinin), 70-80 kDa (comprising alpha - beta-conglycinin) and 45-53 kDa (comprising beta - beta-conglycinin).

The term "beta-conglycinin" generally refers to a trimeric glycoprotein with a molecular weight of 150-200 kDa. The major subunits are alpha' (alpha-prime), alpha, and beta.

The term "11S (protein) fraction" generally denotes a mixture of proteins which have a sedimentation coefficient of 11 Svedberg units. The major component of the 11S fraction of soy proteins is glycinin, which may account for 85% of the 11S protein fraction.

As used herein, the term "11S fraction of soy proteins" particularly refers to the 11S fraction of soy proteins as denatured by SDS-PAGE under non-reducing conditions and in particular denotes the sum of the staining developed by proteins separating at 57-65 kDa (comprising complex AB - glycinin), 36-45 kDa (comprising A - glycinin) and 17-25 kDa (comprising B - glycinin). The staining is calculated by densitometry, which is a combination of signal intensity and surface, calculated by standard software, such as software provided by Biorad.

The term "glycinin" generally refers to a hexamer with a molecular weight of 300-380 kDa. Each subunit is composed of acidic (A) and basic (B) polypeptides. The A and B polypeptides are linked together by a disulfide bond (Staswick et al., 1984).

As used herein, the term "A unit" refers to an acidic subunit of glycinin. An A unit may be detected by SDS-PAGE as a band at a molecular weight of about 40 kDa.

As used herein, the term "B unit" refers to an basic subunit of glycinin. A B unit may be detected by SDS-PAGE as a band at a molecular weight of about 20 kDa.

As used herein, the term "AB complex" refers to a complex of an A unit and a B unit of glycinin linked together through a disulfide bond. An AB complex may be detected by SDS-PAGE under non-reducing conditions as a band at a molecular weight of about 60 kDa.

A suitable technique for performing SDS-PAGE under non-reducing conditions comprises treating a sample of a fermented soy milk product with sample buffer without reductans, such as a buffer comprising sodium dodecyl sulphate (SDS), glycerol, 3-(N-morpholino)propanesulfonic acid (MOPS) buffer at pH 6.8 and bromophenol blue, during at least 1 h at room temperature in a proportion of at least 1/25. Such sample may subsequently be subjected to SDS-PAGE on a polyacrylamide gel of 4-15% at 160 V under constant voltage in MOPS buffer. For determining the 7S and 11S fractions of soy proteins, the gel may be coloured, preferably with coomassie Briljant Blue R250, destained, and scanned with a gelscanner.

Said gelscanner will typically create a spectrum of signal (colour) intensity in relation to the molecular weight of the segregated proteins. The intensity of the staining at a certain molecular weight corresponds to the amount of protein of said molecular weight that is present in the sample. The non-reducing conditions of the SDS-PAGE is crucial, since reduction would also reduce the disulfide-bonds of the AB complex, making it impossible to detect it.

In a further embodiment, the fermented soy milk product can be characterized in that AB complexes of glycinin are present. Said AB complexes may be detected by SDS-PAGE under non-reducing conditions, for example by applying the technique as taught herein.

Preferably, the fermented soy milk product, in particular the stirred soy yoghurt, has a viscosity at a temperature of 7°C of between about 500 mPa.s and about 1000 mPa.s, more preferably between about 600 mPa.s and about 900 mPa.s, at 100 s⁻¹.

Preferably, the fermented soy milk product, in particular the soy yoghurt, does not comprise lactose (i.e. lactose-free).

Preferably, the fermented soy milk product or stirred soy yoghurt is a dairy analogue. The term "dairy analogue" as used herein is meant to refer to a product of vegetable origin and may include a vegetable food product, a vegetable food ingredient, or a vegetable functional food.

The term "vegetable" or "of vegetable origin" as used herein indicates that the product, in particular the fermented stirred soy milk product, stirred soy yoghurt, is animal-free. The term "animal-free" as used herein refers to a product, in particular a fermented stirred soy milk product, stirred soy yoghurt, to which no components of animal origin, such a dairy proteins, lactose, or other animal components were added, but unintended traces of components of animal origin may be present.

The term "food" or "food product" is used herein in a broad sense, and covers food for humans as well as food for animals (i.e. a feed). Preferably, the food is for human consumption. The food may be in the form of a solution or as a solid, depending on the use and/or the mode of application and/or the mode of administration.

The term "vegetable food ingredient" as used herein refers to a formulation which is or can be added in the preparation of other foodstuffs. The food ingredient may be in the form of a solution or as a solid, depending on the use and/or the mode of application and/or the mode of administration. As an example, a stirred soy yoghurt, can be used as an ingredient for a soy milk shake or for a soy ice cream, a cooking cream, a dressing etc., which are based on stirred soy yoghurt.

As used herein, the term "vegetable functional food" means vegetable food which is capable of providing not only a nutritional effect and/or a taste satisfaction, but is also capable of delivering a further beneficial effect to a consumer. Accordingly, functional foods are ordinary foods that have components or ingredients (such as those described herein) incorporated into them that impart to the food a specific functional, e.g. medical or physiological benefit, other than a purely nutritional effect. Some functional foods are nutraceuticals. Here, the term "nutraceutical" means a food which is capable of providing not only a nutritional effect and/or a taste satisfaction, but is also capable of delivering a therapeutic (or other beneficial) effect to the consumer. Nutraceuticals cross the traditional dividing lines between foods and medicine. As an example a *Bifidobacterium* preparation can be cited, which is added to stirred soy yoghurt for the preparation of a vegetable functional food. Such a vegetable functional food could be a nutraceutical in that it contributes to a better gut health, lowering cholesterol, stimulate immunity, etc.

In an embodiment, a fermented soymilk product, or stirred soy yogurt is provided having a protein content of between 2 and 5.5 % by weight, preferably between 3 and 5 % by weight, more preferably between 3.5 and 4.5 % by weight.

In another embodiment, a fermented soymilk product, or stirred soy yogurt is provided having a fat content of between 1 and 10 % by weight, preferably between 1.25 and 6 % by weight, more preferably between 1.5 and 4 % by weight, even more preferably between 1.75 and 3% by weight.

In preferred embodiments, the fermented soy milk product is stirred soy yoghurt. In further preferred embodiments, the fermented soy milk product is spoonable, stirred soy yoghurt, having a smooth structure (i.e. with low or no graininess).

The present invention will be described in greater detail below with the aid of the examples which follow. It goes without saying, however, that these examples are given by way of illustration of the invention and does not constitute in any manner a limitation thereof.

### EXAMPLES

### Example 1: Production of stirred soy yoghurt products

Soy milk (Provamel, Alpro-Wevelgem, Belgium) was supplemented with sucrose, citric acid and sodium chloride (fermented soy milk milk). To 8000 ml soy milk, having a fat content of 184 g, a protein content of 320 g, a total sugar content of 64 g and a pH of 7.2, sucrose was added, bringing the total carbohydrate content to 300 g, as well as citric acid to lower the pH to about 6,5 and minor amounts (approximately 5 g) of sodium chloride.

The formulated soy milk was subjected to a heat treatment at 75°C for 22s (mild heat treatment) or at 145°C for 10s (UHT).

Following cooling, fermentation was carried out at 43°C until pH = 4.5 was reached using a conventional yoghurt culture comprising *Streptococcus thermophilus.* Typically, the fermentation lasted about 7 hours (Fig. 1).

After fermentation, the fermented soy milk products (i.e. soy yoghurts, called "white mass", or "WM") were cooled to 10°C and optionally mixed with
- calcium preparation 1 with 4% pectin
- calcium preparation 2 with 4% pectin
- calcium preparation 3 without pectin
- fruit (strawberry) preparation with pectin

The end products (stirred yoghurts or yofus) were filled in 500 g pots and stored at a temperature of about 5°C in the dark.

### Example 2: Evaluation of the 7S/11S ratio during shelf life

A sample of fermented soy milk product, i.e. stirred soy yoghurt, was treated with sample buffer without reductans (e.g. Biorad XT buffer, non-reducing, typically consisting of SDS, glycerol, MOPS buffer at pH 6,8 and bromophenol blue) during at least 1 hour at room temperature in a proportion of at least 1/25. On this treated sample, SDS-PAGE with a polyacrylamide gel of 4-15 % was done with MOPS as buffer at 160 V under constant voltage. After electrophoresis the gel was coloured with coomassie Briljant Blue R250 (Sigma-Aldrich) and destained. The destained gel was scanned with a gelscanner (GS-800 Biorad), using Quantity One software by Biorad.

7S is considered as the sum of staining developed by proteins separating at 85-95 kD (alpha' - beta-conglycinin), 70-80 kDa (alpha - beta-conglycinin) and 45-53 kDa (beta - beta-conglycinin) and 11S is considered as the sum of staining developed by proteins separating at 57-65 kDa (complex AB - glycinin), 36-45 kDa (A - glycinin) and 17-25 kDa (B - glycinin), as illustrated in Fig. 2.

Figure 3 shows scans of representative gels of processed fermented soy milk products produced from UHT-treated or mild heat-treated soy milk. Table 1 summarizes the 7S/11S ratio of (processed) fermented soy milk products during shelf life.

The results of SDS-PAGE under non-reducing conditions revealed that AB complexes remain intact upon subjecting the soy milk to a heat treatment at 75°C for 22 s (Fig. 3 (b)), whereas the AB complexes are broken following UHT treatment of the soy milk (Fig. 3 (a)).

**Table 1: Evaluation of 7S/11S ratio of fermented soy milk products during shelf life.**

| period of shelf life | UHT | | | | | MILD HEAT TREATMENT | | | | |
|---|---|---|---|---|---|---|---|---|---|---|
| | WM | yofu | | | | WM | yofu | | | |
| | | prep 1, with pectin | prep 2, with pectin | prep 3, without pectin | fruit prep | | prep 1 with pectin | prep 2 with pectin | prep 3 without pectin | fruit prep |
| beginning | | | | 1.58 | 2.17 | | | 1.2 | 0.97 | 1.2 |
| | 2.06 | | | | | | | | 1.05 | |
| | | | 1.88 | | | 0.95 | | 1.16 | | 1.26 |
| | 1.96 | | | | | | | | 1.03 | |
| | | | 1.75 | | | 0.91 | | 0.88 | | 0.99 |
| | 1.56 | | | | | | | | 0.83 | |
| | | | | | | | | 0.92 | | 1 |
| | | | | | | | | | 0.89 | |
| end | 1.52 | | | 1.83 | 1.54 | 1.08 | 1 | 1.06 | 0.93 | 1.12 |
| | 1.62 | | | | 1.76 | 1.06 | | | | |
| | | | | 1.71 | | | 1 | 0.91 | 0.97 | 1.05 |
| | 1.63 | | | | 1.57 | 1.07 | | | | |

| | | | | | | | | | | |
|---|---|---|---|---|---|---|---|---|---|---|
| WM = white mass, i.e. fermented soy milk product or soy yoghurt. Yofu = stirred soy yoghurt, optionally supplemented with e.g. pectin, calcium slurries or fruit preparations. | | | | | | | | | | |

As an alternative for detecting AB complexes, the ratio between 7S and 11S was calculated.

Table 1 shows that this ratio is higher for fermented soy milk products, i.e. stirred soy yoghurts, produced from UHT-treated soy milk as compared to mild heat-treated soy milk. 7S/11S ratios of fermented soy milk products derived from mild heat-treated soy milk range between 0,8 and 1,26, whereas the 7S/11 S ratios are higher than 1,5 for fermented soy milk products, i.e. stirred soy yoghurts, derived from UHT-treated soy milk. Table 1 further reveals that this ratio remains substantially the same during the shelf life of the fermented soy milk product, i.e. stirred soy yoghurt.

In conclusion, dissociation of AB complexes can be prevented by subjecting the soy milk to a mild heat treatment instead of UHT-treatment. Correspondingly, fermented soy milk products, i.e. stirred soy yoghurts, derived from mild heat-treated soy milk are characterized by a reduced 7S/11S ratio as determined by SDS-PAGE under non-reducing conditions, which typically ranges between 0,5 and 1,5, more particularly between 0,8 and 1,26, in comparison to fermented soy milk products derived from UHT-treated soy milk. Unexpectedly, the intensity of the pre-fermentation heating step is crucial here.

### Example 3: Evaluation of the 7S/11S ratio in commercial yofus

Samples of commercially available yofus (stirred soy yoghurts) were subjected to SDS-PAGE under non-reducing conditions and the 7S/11S ratio was calculated following the protocol described in Example 2.

Table 2 gives an overview of the 7S/11 S ratio of commercially available yofus.

**Table 2: 7S/11S ratio of commercial yofus.**

| **Brand** | **Producer** | **flavor** | **7S/11S*** |
|---|---|---|---|
| Cora | unknown | Nature | 1.52 |
| Sojasun | Triballat Noyal | Nature | 2.2; 2.43 |
| Savia | Compagnie Gervais-Danone | Sugared | 1.54 |
| Rainbow | Mona Group | Nature | 1.72; 1.95 |
| Rainbow | Mona Group | Berries | 1.87; 1.98 |
| Sojade | Triballat Noyal | Nature | 2.09; 2.16 |
| Joya | Mona Group | Nature | 1.55; 1.71; 1.54 |
| Joya | Mona Group | Nature Bio | 1.98 |

The 7S/11 S ratio of the tested yofus is comparable to the 7S/11 S ratios of the fermented soy milk products produced from UHT-treated soy milk (Table 1,2) and is higher than the 7S/11s ratio of fermented soy milk products produced from mild heat-treated soy milk.

### Example 4: Evaluation of graininess during shelf life

Grain formation was assessed by the photometric scanning method. 2g of sample of the stirred soy yoghurts (yofu) was smeared on a plate (Petri plate or dish) with 0.5 g of water (to ensure complete covering of the plate) and a scan was taken (Program: Quality one; settings scanner: photograph negative white). Grains appeared as white spots on the plate. Depending on the frequency of the white spots the samples were categorized in four different categories according to Fig. 4:
1. No grains
2. Acceptable graininess
3. Moderate graininess
4. Very strong graininess

Table 3 gives the scores of fermented soy milk products (yofus) during the shelf life and Fig. 4 illustrates this with the scans taken after 3, 21 and 47 days of shelf life.

**Table 3: Scores for graininess of fermented soy milk products during shelf life.**

| | UHT | | | MILD HEAT TREATMENT | | | | |
|---|---|---|---|---|---|---|---|---|
| | WM | yofu | | WM | yofu | | | |
| day of shelf life | | prep 3, without pectin | fruit prep | | prep 1 with pectin | prep 2 with pectin | prep 3 without pectin | fruit prep |
| 3 | 4 | 4 | 3 | 1 | 1 | 1 | 1 | 1 |
| 5 | 4 | 3 | 3 | 2 | 1 | 1 | 1 | 1 |
| 7 | 4 | 4 | 3 | 2 | 1 | 1 | 1 | 1 |
| 10 | 3 | 3 | 2 | 2 | 1 | 1 | 1 | 1 |
| 12 | 4 | 3 | 2 | 2 | 1 | 1 | 1 | 1 |
| 18 | 4 | 4 | 4 | 3 | 1 | 1 | 1 | 1 |
| 21 | 4 | 4 | 4 | 3 | 1 | 2 | 2 | 2 |
| 24 | 4 | 4 | 4 | 3 | 1 | 1 | 2 | 1 |
| 26 | 4 | 4 | 4 | 3 | 1 | 2 | 2 | 1 |
| 28 | 4 | 4 | 4 | 3 | 1 | 1 | 2 | 2 |
| 31 | 4 | 4 | 4 | 3 | 1 | 1 | 2 | 2 |
| 33 | 4 | 4 | 3 | 3 | 1 | 1 | 2 | 1 |
| 35 | 4 | 4 | 4 | 3 | 1 | 2 | 3 | 1 |
| 38 | 4 | 4 | 3 | 3 | 2 | 1 | 3 | 1 |
| 43 | 4 | 4 | 3 | 3 | 2 | 1 | 3 | 2 |
| 45 | 4 | 4 | 3 | 3 | 2 | 1 | 3 | 2 |
| 47 | 4 | 4 | 4 | 3 | 2 | 1 | 3 | 2 |

| | | | | | | | | |
|---|---|---|---|---|---|---|---|---|
| WM = white mass, i.e. fermented soy milk product or soy yoghurt Yofu = stirred soy yoghurt, optionally supplemented with e.g. pectin, calcium slurries or fruit preparations. | | | | | | | | |

From the beginning of the shelf life the structure of the UHT-treated white mass, the yofu without pectin, and the yofu with the fruit preparation were inacceptable (Table 3, Fig. 4; score ≥ 3). Addition of pectin to the fermented soy milk products retarded the grain formation (Fig. 4; scores < 3).

The grain formation was acceptable in the beginning of the shelf life for the mild heat-treated white mass and yofus (Table 3, Fig. 4; score < 3). The smooth structure persisted longer for the yofus than for the white mass; only the yofu without pectin reached a graininess of ≥ 3 at the end of the shelf life, indicating that pectin can further limit grain formation at the end of the shelf life.

Important to note is that although pectin can keep the product more stable during the shelf-life, the process of the invention clearly reduces the need to add pectin to the soy yoghurt at shorter shelf lives (compare e.g. the "prep 3" of both UHT and Mild heat treatment in the beginning of the shelf life, also reflected in Fig. 4).

In conclusion, mild heat treatment at 75°C for about 20 to 30 seconds (e.g. 22 s) smoothens the structure of the white mass and the yofus as compared to UHT. Addition of pectin can further limit grain formation. However, both the appearance of grains only at the end of the shelf life for yofus without pectin and the absence of grains at the end of the shelf life for yofus with pectin indicate that a considerable reduction in the amount of pectin to be added should be feasible.

### Example 5: Microbiological evaluation during shelf life

The presence of viable microorganisms in samples of the fermented soy milk products, i.e. stirred soy yoghurts (yofus) was tested by checking the total plate count (TPC), yeasts and moulds, and thermoresistant spore forming bacteria expressed in colony forming units per gram (cfu/g).

The total plate count was determined in accordance with International Standard ISO4833: Microbiology of food and animal feeding stuffs - Horizontal method for the enumeration of microorganisms - Colony-count technique at 30°C.

Yeasts and molds were enumerated in accordance with International standard ISO 7954: Microbiology - General guidance for enumeration of yeasts and moulds - Colony count technique at 25°C.

For determining the number of thermo-resistant spore forming bacteria, a sample of the fermented soy milk product was heated in a warm water bad at 100°C for 30 min. The heated sample was then transferred to 2 sterile petri dishes and molten plate count agar (PCA) (of about 45°C) was added. Following solidification, one plate was incubated at 30°C and the other at 55°C for 48 hours, after which the colonies were counted.

Results of the microbial analyses are summarized in Table 4.

**Table 4: Microbiological evaluation of the fermented soy milk products.**

| | TPC (30°C) | Yeast & Moulds | Thermoresistant spores |
|---|---|---|---|
| | (CFU/g) | (CFU/g) | |
| | | | (CFU/g) |
| Mild heat-treated WM | <10 | <10 | <10/<10 |
| Mild heat-treated yofu milk, prep 1 with pectin | <10 | <10 | NP |
| Mild heat-treated yofu milk, prep 2 with pectin | <10 | <10 | NP |
| Mild heat-treated yofu milk, prep 3 without pectin | <10 | <10 | NP |
| Mild heat-treated yofu milk, fruit prep | <10 | <10 | NP |
| UHT WM | <10 | <10 | <10/<10 |

| | | | |
|---|---|---|---|
| NP indicates not performed. WM = white mass, i.e. fermented soy milk product or soy yoghurt Yofu = stirred soy yoghurt, optionally supplemented with e.g. pectin, calcium slurries or fruit preparations. | | | |

Less than 10 colonies per gram were measured in the samples, which indicates that there are virtually no microorganisms present in the samples.

Furthermore, an incubation test of 600 test samples (180 UHT-treated WM and yofus and 420 mild heat-treated WM and yofus) was performed for 1 week at 25°C. After opening the pots and visual examination in neither of the pots yeast and moulds could be detected.

In conclusion, microbiological quality of fermented soy milk products is satisfactory after mild heat treatment and similar to UHT treatment.

### Example 6: Sensory evaluation during shelf life

Profiling tests were performed on the fermented soy milk products, i.e. stirred soy yoghurts (yofus), after 4 weeks of storage to compare mild heat treatment of the soy milk versus UHT treatment. A trained panel was asked to give a score from 0 (low intensity) to 9 (strong intensity) to the samples of the fermented soy milk products for "off-flavors", "gray color", "graininess", "soya flavor", "oxidation", "acidity", "sweetness", "fruit intensity" and/or "general appreciation".

The different scores are summarized in Fig. 5.

The results indicate that a mild heat treatment strongly decreases graininess in the fermented soy milk products as compared to UHT treatment of the soy milk, confirming the results of Example 4.

The fermented product from 'mild heat-treated' white mass shows a slight increase in off-flavors resulting in a lower general appreciation. However, when further processed (with preparations 1 or 3 or with the fruit preparation), the off-flavors seem to be masked, even when no aromas are present in the preparation (e.g. preparation 3), which causes an overall increase of the general appreciation.

Remarkably, the fruit intensity is increased in the fermented mild heat-treated soy milk product with the fruit (strawberry) preparation as compared to the fermented UHT-treated soy milk product with the fruit preparation. Also, there is a color improvement of the fermented mild heat-treated soy milk product with the fruit (strawberry) preparation, which appears less gray and more red as compared to fermented UHT-treated soy milk product with the fruit preparation.

### Example 7: Viscosity determination

The viscosity of different types of yoghurts was determined at 7°C at a shear rate of 10, 40, 70 and 100 s⁻¹ using a viscometer.

Viscosity measurements were performed with a Physica Anton Paar rheometer MCR 301, using a cup and bob geometry (concentric cylinders CC27). Product was put at 7 °C, and viscosity has been measured while increasing the shear rate from 10 to 100 s⁻¹. The "Alpro, nature" and "Alpro, raspberry" were stirred soy yoghurts or yofus prepared in accordance with the method of the invention, the other products represent set or drink dairy (cow milk-based) yoghurts.

**Table 5: Viscosity (mPa.s) of dairy or soy-based drink, stirred and set yoghurts.**

| **Type** | **Brand** | **Shear rate (s⁻¹⁾** | | | |
|---|---|---|---|---|---|
| | | 10 | 40 | 70 | 100 |
| drink | Campina, Fresh Yó, Strawberry | 81.8 | 61.6 | 55.2 | 51.3 |
| stirred | Alpro, Nature | 2280 | 1330 | 836 | 601 |
| stirred | Alpro, Raspberry | 5230 | 1930 | 1170 | 844 |
| set | Danone, Activia, Lemon | 6300 | 2000 | 1270 | 903 |

## Claims

1. A method for producing a stirred soy yoghurt comprising the steps of:
a) subjecting a soy milk to a heat treatment at a temperature of between about 72°C and about 75°C for between about 20 seconds and about 30 minutes;
b) fermenting the heat-treated soy milk;
c) optionally adding a hydrocolloid or other nutritional, flavouring or colouring agents to the fermented soy milk; and
d) filling of the fermented soy milk into its packaging.

2. The method according to claim 1, wherein said soy yoghurt has a protein content of between 2 and 5.5 % by weight and/or a fat content of between 1 and 10 % by weight.

3. The method according to claim 1 or 2, wherein no coagulating agent is added to the soy milk prior to the heating and fermentation step.

4. The method according to any one of claims 1 to 3, wherein the soy milk is fermented using a bacterial culture comprising a *Streptococcus thermophilus* strain.

5. The method according to any one of claims 1 to 4, wherein the hydrocolloid that is added to the fermented soy milk is pectin.

6. The method according to any one of claims 1 to 5, which further comprises the step of adding a carbon source and/or an edible organic acid or its salt to the soy milk prior to the fermentation.

7. A stirred soy yoghurt having a ratio of the 7S fraction of soy proteins to the 11S fraction of soy proteins as determined by sodium dodecyl sulphate polyacrylamide gel electrophoresis under non-reducing conditions between 0.5 and 1.5,
wherein the 7S fraction is the sum of staining developed by proteins separating at 85-95 kD (alpha' - beta-conglycinin), 70-80 kDa (alpha - beta-conglycinin) and 45-53 kDa (beta - beta-conglycinin) and the 11S fraction is the sum of staining developed by proteins separating at 57-65 kDa (complex AB - glycinin), 36-45 kDa (A - glycinin) and 17-25 kDa (B - glycinin).

8. The soy yoghurt according to claim 7, having a protein content of between 2 and 5.5 % by weight, and/or a fat content of between 1 and 10 % by weight.

9. The stirred soy yoghurt according to claim 7 or 8, having a smooth structure

10. The stirred soy yoghurt according to any one of claims 7 to 9, wherein complexes of an acidic subunit of glycinin and a basic subunit of glycinin linked together through a disulfide bond are present.

11. The stirred soy yoghurt according to claim 10, wherein said complexes of an acidic subunit of glycinin and a basic subunit of glycinin linked together through a disulfide bond are detected by sodium dodecyl sulphate polyacrylamide gel electrophoresis under non-reducing conditions.

12. The stirred soy yoghurt according to any one of claims 7 to 11, wherein the soy yoghurt is a non-dairy product, and/or wherein the soy yoghurt does not contain lactose, and/or other animal- or dairy-derived products or components.

13. Use of a stirred soy yoghurt obtainable by the method according to any one of claims 1 to 6 or the soy yoghurt according to any one of claims 7 to 11 for the production of food products.

14. The method according to any one of claims 1 to 6, wherein the stirred soy yoghurt is a non-dairy product, and/or wherein the stirred soy yoghurt does not contain lactose, and/or other animal- or dairy-derived products or components.
